# EUROPÄISCHE PATENTSCHRIFT

(11) **EP 2 062 717 B1**
(45) Veröffentlichungstag und Bekanntmachung des Hinweises auf die Patenterteilung: **01.05.2013**
(21) Anmeldenummer: 07120596.7
(22) Anmeldetag: 13.11.2007
(51) Int. Cl.: B29C 47/06, B29C 44/20, B29C 44/22, B29C 44/32, B29C 44/34, B29C 47/88, B29C 47/90

(54) **Verfahren zur Herstellung von versteiften Kunststoffprofilen mit verbesserter thermischer Isolation für den Fensterbau und Verwendung**
Method for manufacturing stiff plastic sections with improved heat insulation for window construction and the use
Procédé de fabrication de profils en matière plastique durcis à isolation thermique améliorée pour la structure d'une fenêtre et la utilisation

(43) Veröffentlichungstag der Anmeldung: 27.05.2009
(73) Patentinhaber: Sika Technology AG, 6340 Baar (CH)
(72) Erfinder: Knapp, Wolf Dieter, 65520 Bad Camberg (DE)
(74) Vertreter: Sika Patent Attorneys

(56) Entgegenhaltungen:
- DE-A1- 10 051 257
- US-A- 2 983 962
- US-A- 3 327 030
- US-A- 5 728 330

## Beschreibung

### Technisches Gebiet

Die Erfindung geht aus von einem Verfahren zur Herstellung von Kunststoffprofilen mit einem geschäumten Kern nach dem Oberbegriff des ersten Anspruchs, welche insbesondere geeignet sind als Rahmen- und/oder Flügelprofile für Fenster, Türen und dergleichen.

Solche Verfahren werden in US 3327030, US 5728330, DE 10051257, US2983962 und US 3327030 offenbart.

Zur Versteifung von extrudierten Kunststoffhohlprofilen werden oftmals Stahlprofile in den Hohlraum eines Kunststoffhohlprofils eingeschoben. Derartig verstärkte Kunststoffprofile werden häufig als Rahmen- und/oder Flügelprofile von Fenstern, Türen und dergleichen eingesetzt. Der verwendete Kunststoff ist dabei meistens Polyvinylchlorid (PVC). Der Nachteil dieser mit Stahlprofilen verstärkten Kunststoffprofile ist unter anderem, dass durch den Einsatz von Metallen im Inneren des Kunststoffprofils, die Wärmedämmung erheblich beeinträchtigt wird. Der Grund dafür ist die gute Wärmeleitfähigkeit von Metallen im Allgemeinen. Zur Erzielung einer verbesserten Wärmedämmung wird die Hohlkammer des Stahlprofils, welches in das Kunststoffprofil eingeschoben wird, mit einem schäumbaren Material, beispielsweise mit einem Polyurethanschaum, ausgeschäumt. Die nachträgliche Ausschäumung eines Hohlprofils erweist sich jedoch als sehr umständlich, da gerade Fensterprofile üblicherweise in einer Länge von mehreren Metern extrudiert werden und die Ausschäumung dann mittels einer langen Sonde vorgenommen werden muss.
Der ersatzlose Verzicht auf Metallprofile zur Verstärkung von Kunststoffprofilen kommt aufgrund der zu geringen Steifigkeit nicht in Frage.
Um dennoch auf Metall im inneren des PVC-Profils zu verzichten, werden neuerdings zur Verstärkung thermisch isolierende Verstäkrungsprofile eingesetzt, welche aus faserverstärkten Verbundstoffen hergestellt und mit Polyurethanschaum ausgeschäumt sind. Der Nachteil derartiger Profile ist das aufwendige Herstellungsverfahren, bei welchem das Kernprofil separat vom Aussenprofil hergestellt wird und erst nach Fertigstellung in das Aussenprofil eingeschoben wird.

### Darstellung der Erfindung

Der Erfindung liegt die Aufgabe zugrunde, ein einfaches Verfahren zur Herstellung von Kunststoffprofilen zur Verfügung zu stellen, wobei deren mechanische Eigenschaften sowie die Eigenschaften der thermischen Isolation gegenüber dem Stand der Technik verbessert werden.

Erfindungsgemäss wird dies durch die Merkmale des ersten Anspruchs erreicht.

Kern der Erfindung ist also ein Verfahren zur Herstellung von Kunststoffprofilen mit einem geschäumten Kern in einem Co-Extrusionsverfahren, wobei ein schäumbares Material, in festem Zustand, in den Hohlraum eines Kunststoffhohlprofils co-extrudiert wird und darin geschäumt wird, wobei
i) in einem ersten beheizbaren Extruder ein Kunststoff im festen Zustand eingefüllt wird;
ii) der Kunststoff während der Förderung mittels Förderschnecke in Richtung der Düse aufgeschmolzen und komprimiert wird;
iii) der aufgeschmolzene Kunststoff durch die Düse zu einem Hohlprofil ausgepresst wird;
iv) in einem zweiten Extruder ein festes, schäumbares Material eingefüllt wird;
v) das schäumbare Material im festen Zustand mittels einer Förderschnecke in Richtung der Düse gefördert wird;
vi) das schäumbare Material im festen Zustand in den Hohlraum des co-extrudierten Kunststoffprofils gefördert wird;
vii) das schäumbare Material im inneren des Kunststoffprofils ausschäumt.

Die Vorteile der Erfindung sind unter anderem darin zu sehen, dass die erfindungsgemässen Profile in einem einfachen Verfahren durch Co-Extrusion hergestellt werden können. Die Länge der Profile kann dabei beliebig gewählt sein und es können auch sehr lange Profile ohne weiteren Aufwand hergestellt werden, da das schäumbare Material bzw. der Schaum nicht nachträglich in die Kunststoffhohlprofile eingebracht werden muss.
Weiterhin vorteilhaft sind die verbesserten mechanischen Eigenschaften sowie die verbesserte Wärmedämmung der Kunststoffprofile, welche durch das erfindungsgemässe Verfahren hergestellt werden. Diese Eigenschaften können durch die Wahl des schäumbaren Materials zusätzlich beeinflusst werden.
Ein weiterer Vorteil des vorliegenden Verfahrens ist, dass bei Verwendung eines thermisch schäumbaren Materials die Schäumung dieses Materials durch Nutzung der von der Extrusion des Kunststoffprofils vorhandenen Wärme erfolgen kann. Es muss also keine weitere Energie zur Schäumung eingebracht werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Figur 1: eine schematische Darstellung eines Kunststoffprofils im Querschnitt;
- Figur 2: eine schematische Darstellung eines Fensterprofils im Querschnitt;
- Figur 3: eine schematische Darstellung eines erfindungsgemässen Co-Extrusionsverfahrens zur Herstellung eines Kunststoffprofils.

Es sind nur die für das unmittelbare Verständnis der Erfindung wesentlichen Elemente gezeigt. Selbstverständlich ist die Erfindung nicht auf gezeigte und beschriebene Ausführungsbeispiele beschränkt.

### Weg zur Ausführung der Erfindung

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Als "Kunststoffhohlprofil" (auch "Aussenprofil" genannt) wird in diesem Dokument ein länglicher Hohlkörper aus Kunststoff bezeichnet, dessen Länge in der Regel wesentlich grösser ist als sein Querschnitt. In einem Co-Extrusionsverfahren, in welchem ein zweites Material in das Innere diese Hohlkörpers co-extrudiert wird, wobei der Hohlkörper vollständig ausgefüllt wird, bezieht sich der Begriff Kunststoffhohlprofil nur auf diesen äusseren Kunststoffkörper. Das Innere Material wird "Kern" genannt.
Der Begriff "Kunststoffprofil" bezeichnet im vorliegenden Dokument das gesamte Element, das heisst das Kunststoffhohlprofil inklusive Kern.

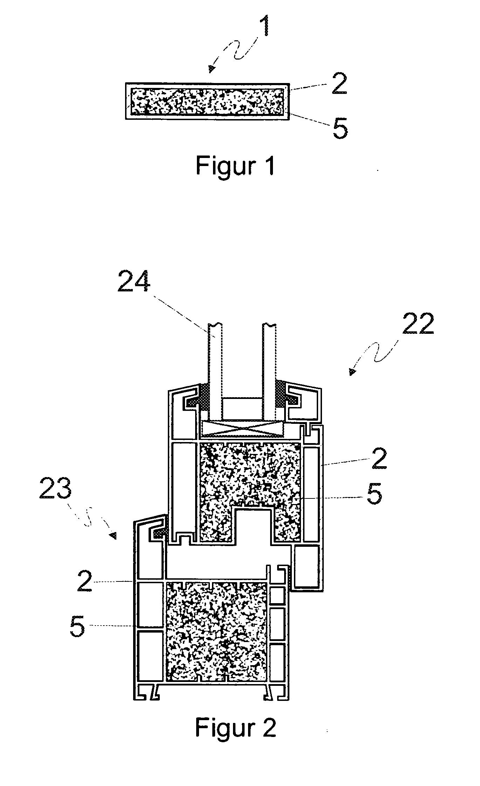

In den Figuren 1 und 2 sind nach einem erfindungsgemässen Verfahren hergestellte Kunststoffprofile 1 schematisch dargestellt, welche aufgebaut sind aus einem Kunststoffhohlprofil 2 bzw. Aussenprofil und einem Kern 5 aus einem geschäumten Material.
Figur 1 zeigt dabei schematisch eine einfache Form eines derartigen Kunststoffprofils 1 mit einer rechteckigen Querschnittsgestalt. Derartige Kunststoffprofile eignen sich beispielsweise als Lamellen für Kunststoffjalousien und dergleichen.

Figur 2 zeigt als bevorzugte Ausführungsform eines erfindungsgemässen Kunststoffprofils schematisch ein Fensterprofil umfassend ein Rahmenprofil 23 und ein Flügelprofil 22, welches die Glasscheibe 24 des Fensters einfasst.
Sowohl das Flügelprofil 22 als auch das Rahmenprofil 23 weisen einen geschäumten Kern 5 auf und wurden in einem erfindungsgemässen Verfahren hergestellt. Neben dem ausgeschäumten Hohlraum, weist das Fensterprofil weitere nicht ausgeschäumte Hohlräume auf. Selbstverständlich kann eine andere Unterteilung der Hohlräume im Inneren des Fensterprofils gewählt werden, wobei auch weitere Hohlräume mit dem schäumbaren Material ausgeschäumt sein können. Durch entsprechende Wahl der Düse 12 kann eine beinahe beliebige Unterteilung der Hohlräume und deren allfällige Ausschäumung in einem erfindungsgemässen Co-Extrusionsverfahren erzielt werden.
Derartige Fensterprofile haben den Vorteil, dass sie bei sehr hoher Steifigkeit eine sehr gute thermische Isolation bzw. Wärmedämmung aufweisen. Diese ist einerseits darauf zurückzuführen, dass sowohl das Flügel- als auch das Rahmenprofil des Fensters keine Metallprofile wie Stahlprofile als Verstärkung im Inneren beinhalten. Andererseits ist die gute Wärmedämmung auch auf die thermisch isolierenden Eigenschaften des geschäumten Kerns 5 zurückzuführen.
Zusätzlich zur hohen Steifigkeit und zur sehr guten thermischen Isolation, verbessert sich bei den in einem erfindungsgemässen Verfahren hergestellten Kunststoffprofilen auch die akustische Isolation, was insbesondere im Fensterbau einen zusätzlichen Vorteil darstellt.
Analog zum Fensterprofil in Figur 2 kann ein derartiges Kunststoffprofil, sei es ein- oder zweiteilig, beispielsweise für Türen, Tore, Klappen, Luken und dergleichen eingesetzt werden.

Derartige Kunststoffprofile werden in einem Co-Extrusionsverfahren dadurch erhalten, dass ein schäumbares Material in festem Zustand in das Innere eines extrudierten Kunststoffhohlprofils co-extrudiert wird und dort geschäumt wird.

Als Kunststoff für die Herstellung der Kunststoffhohlprofile eignen sich typischerwiese thermoplastisch verarbeitbare Kunststoffe wie Polyvinylchlorid (PVC), insbesondere Hart-PVC (auch PVC-U bzw. "unplasticized PVC" genannt), oder Polypropylen (PP), Polymethyl(meth)acrylat (PMMA) Polycarbonat (PC) oder andere geeignete Thermoplaste. Insbesondere geeignet ist PVC, bevorzugt Hart-PVC. Ein Grund dafür ist unter anderem die Witterungsbeständigkeit des PVC und die damit verbundene Möglichkeit der Anwendung im Freien.

Weiterhin kann der Kunststoff für die Herstellung der Kunststoffhohlprofile zusätzliche Bestandteile enthalten wie beispielsweise Stabilisatoren wie Hitze- und Lichtstabilisatoren, Schlagzähigkeitsmodifikatoren, Weichmacher, Flammschutzmittel, Antistatika, Füllstoffe, Fasern wie Glas- oder Kohlefasern, Farbstoffe oder Pigmente.
Insbesondere bei der Verwendung von Hart-PVC ist der Zusatz von Stabilisatoren notwendig, da Hart-PVC hitzeempfindlich ist und bei Temperaturen von etwa 140 °C dessen Zersetzung beginnt.

Als schäumbares Material für den Kern des Kunststoffprofils kann grundsätzlich jedes beliebige Material eingesetzt werden, das kontrolliert zur Schäumung gebracht werden kann und Verstärkungseigenschaften aufweist. Vorzugsweise wird das schäumbare Material thermisch, durch Feuchtigkeit oder durch elektromagnetische Strahlung geschäumt.
Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Meist bevorzugt wird das schäumbare Material thermisch, bei einer Temperatur von ≤ 160 °C, insbesondere von 80 °C bis 150 °C, bevorzugt von 90 °C bis 140 °C, geschäumt, wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen wie einer exothermen chemischen Reaktion eingebracht werden.

In einer meist bevorzugten Ausführungsform des erfindungsgemässen Verfahrens zur Herstellung von Kunststoffprofilen erfolgt die Schäumung des schäumbaren Materials thermisch und insbesondere dadurch, dass das schäumbare Material nach der Co-Extrusion bzw. nach verlassen der Düse mit den Innenwänden des Kunststoffhohlprofils in Berührung kommt, dadurch einer für den Schäumungsvorgang ausreichend hohen Temperatur ausgesetzt ist und somit erweicht und ausschäumt.
Der Vorteil dieser bevorzugten Ausführungsform ist, dass es für die Schäumung des schäumbaren Materials keine separaten Energiequellen bedarf, sondern dass die Abwärme des extrudierten Kunststoffhohlprofils für die Schäumung genutzt werden kann.

Weiterhin sind insbesondere schäumbare Materialien bevorzugt, welche die Abwärme des extrudierten Kunststoffhohlprofils nicht nur für die Schäumung sonder auch für die Aushärtung des Schaums nutzen. Das heisst, dass gegebenenfalls im schäumbaren Material vorhandene hitzeaktivierbare Härter oder andere chemisch oder physikalisch blockierte Verbindungen wie blockierte oder verkapselte Härter, welche für die Aushärtung des geschäumten Materials freigesetzt werden müssen, ebenfalls die Abwärme des extrudierten Kunststoffhohlprofils für ihre Deblockierung oder ihre Freisetzung nutzen. Dabei soll die Aushärtung des schäumbaren Materials erst bei einer Temperatur einsetzen, welche gleich oder über dessen Schäumungstemperatur liegt, da ansonsten die Aushärtung des schäumbaren Materials vor dessen Ausschäumung erfolgt und dadurch nicht gewährleistet werden könnte, dass das geschäumte Material vor der Aushärtung den gesamten Hohlraum des Kunststoffhohlprofils ausgefüllt hat und dass der Schaum eine kompakte Struktur aufweist.

In einem meist bevorzugten Verfahren erweicht das schäumbare Material bei einer Temperatur, welche unterhalb der Schäumungstemperatur liegt, wodurch seine Verformung durch den Schäumungsvorgang erst möglich wird. Ist die Schäumungstemperatur erreicht, wird das schäumbare Material geschäumt. Der Aushärtungsvorgang setzt schliesslich insbesondere erst dann ein, wenn die Schäumungstemperatur überschritten und die Schäumung zumindest teilweise abgeschlossen ist.
Selbstverständlich sind die Temperaturbereiche, bei welchen das schäumbare Material erweicht, schäumt und aushärtet, nicht scharf voneinander abgegrenzt und können ineinander überlaufen. Beispielsweise findet die Erweichung des schäumbaren Materials bei einer Temperatur im Bereich von 70 °C bis 120 °C ein, der Schäumungsvorgang bei einer Temperatur von 80 °C bis 160 °C und die Aushärtung bei einer Temperatur von 140 °C bis 220 °C statt. Bei der Wahl und der Herstellung des schäumbaren Materials ist deshalb darauf zu achten, dass seine temperaturabhängigen Eigenschaften diesen Anforderungen des Verfahrens genügen, das heisst, dass beispielsweise die Wahl des Treibmittels und des hitzeaktivierbaren Härters so aufeinander abgestimmt sind, dass die Schäumung vor der Aushärtung abläuft.

Ebenfalls von grosser Bedeutung ist die gegenseitige Abstimmung des schäumbaren Materials des Kerns auf den thermoplastisch verarbeitbaren Kunststoff des Kunststoffhohlprofils. Vorzugsweise wird das schäumbare Material so gewählt, dass die Abwärme des extrudierten Kunststoffhohlprofils für das Erweichen, Schäumen und Aushärten des schäumbaren Materials ausreichend ist.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsverbesserer, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf.
Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4- und 2,6-Toluylendiisocyanat (TDI) oder 1-Isocyanato-3,3,5-trimethyl-5-isocyanatomethyl-cyclohexan (IPDI).
Als Zähigkeitsverbesserer für das schäumbare Material eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polyisocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate geeignet, welche dem Fachmann bekannt und beispielsweise beschreiben sind im Patent EP 0 204 970.

Weiterhin eignen sich als schäumbare Materialien Treibmittel enthaltende zweikomponentige Epoxid/Polyurethan-Zusammensetzungen, wie sie beispielsweise beschrieben sind im Patent WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist.
Als schäumbare Materialien mit Verstärkungseigenschaften sind beispielsweise diejenigen besonders bevorzugt, welche unter dem Handelsnamen SikaReinforcer^{®} 941 von der Sika Corp., USA, vertrieben werden. Diese sind beschrieben im Patent US 6,387,470, dessen Offenbarung hiermit eingeschlossen ist.

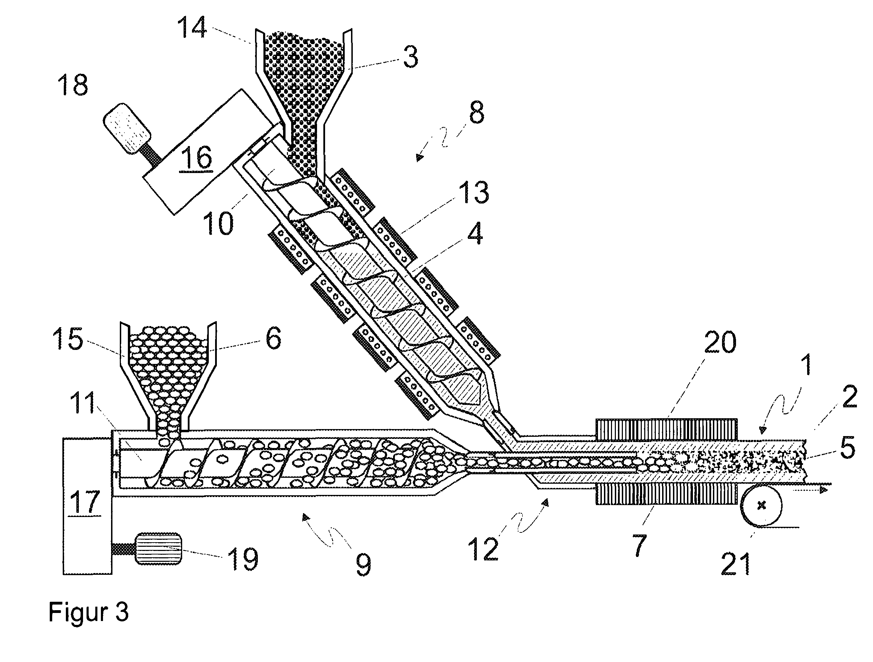

In Figur 3 ist ein erfindungsgemässes Verfahren zur Herstellung von Kunststoffprofilen 1 mit einem geschäumten Kern 5 schematisch dargestellt.
Dabei wird der Trichter 14 des ersten Extruders mit einem festen, thermoplastisch verarbeitbaren Kunststoff 3 gefüllt. Dieser Kunststoff 3 kann dabei in beliebiger Form vorliegen. Insbesondere liegt der Kunststoff als Granulat oder als Pulver vor.
Der Kunststoff wird vorzugsweise bei einer Temperatur von 150 °C bis 350 °C, insbesondere von 170 °C bis 260 °C, bevorzugt von 180 °C bis 220 °C, extrudiert.
Der Kunststoff 3 gelangt durch den Trichter 14 in das Innere des ersten Extruders 8. Im Inneren des ersten Extruders wird der Kunststoff mittels einer Förderschnecke 10, welche durch einen Motor 18 über ein Getriebe 16 betrieben wird, in Richtung einer Düse 12 gefördert und gleichzeitig durch Heizelemente 13, welche am ersten Extruder angebracht sind von aussen auf eine Temperatur über seinen Schmelzpunkt beheizt, wodurch der Kunststoff schmilzt. Der aufgeschmolzene Kunststoff 4 wird durch die Düse 12, welche die Querschnittsgestalt des herzustellenden Profils aufweist, gepresst.
Parallel zum vorhergehend beschriebenen Verfahren wird das schäumbare Material 6, insbesondere in Form von Granulat, in den Trichter 15 des zweiten Extruders 9 gefüllt und gelangt dann über diesen ins Innere des zweiten Extruders. Im Gegensatz zum ersten Extruder ist der zweite nicht beheizt und das schäumbare Material wird in festem Zustand mittels einer Förderschnecke 11, welche durch einen Motor 19 über ein Getriebe 17 betrieben wird, in Richtung der Düse 12 gefördert.
An der Düse wird das schäumbare Material 6 in den Hohlraum des Kunststoffhohlprofils co-extrudiert, wo es mit den Innenwänden des Kunststoffhohlprofils in Berührung kommt. Das Kunststoffhohlprofil, welches aus der Schmelze vorzugsweise bei einer Temperatur von 150 °C bis 350 °C, insbesondere von 170 °C bis 260 °C, bevorzugt von 180 °C bis 220 °C, extrudiert wurde, weist dabei eine genügend hohe Temperatur auf um das schäumbare Material zu erweichen, thermisch, bei einer Temperatur von ≤ 160 °C, insbesondere von 80 °C bis 150 °C, bevorzugt von 90 °C bis 140 °C, zur Schäumung zu bringen und auszuhärten.

Während des Schäumungsvorgangs übt das teilweise geschäumte Material 7 oder das bereits vollständig geschäumte Material 5 von innen ein Druck auf das Kunststoffhohlprofil aus wodurch es sich fest mit dem Kunststoffhohlprofil verbindet und eine sehr steife und stabile Struktur mit einer hohen Verwindungsfestigkeit aufbaut. Das Einführen des Kunststoffprofils 1 in eine Kalibriereinrichtung 20 soll dabei gewährleisten, dass das Kunststoffhohlprofil bis zum Erstarren des Kunststoffs nicht durch den Schäumungsvorgang verformt wird sondern seine vorgegebene Querschnittsgestalt beibehält.

Derartige Kalibriereinrichtungen 20 weisen vorzugsweise konturgenaue Gegenformen der äusseren Querschnittsgestalt des herzustellenden Kunststoffhohlprofils 2 auf, wobei das Kunststoffhohlprofil zusätzlich zum Anpressdruck, welchen das schäumbaren Material durch die Schäumung von Innen auf das Hohlprofil ausübt, noch durch Vakuumkammern, die über die Länge der Kalibriereinrichtung verteilt sind, an die Kalibrierinnenwand gesaugt werden kann. Weiterhin kann die Kalibriereinrichtung gekühlt sein, wobei jedoch darauf geachtet werden muss, dass die Temperatur im Inneren des Kunststoffprofils genügend hoch ist, damit die Erweichung, die Schäumung und die Aushärtung des schäumbaren Materials 6 vollständig abläuft. Gegebenenfalls kann die Kalibriereinrichtung zur Unterstützung des Schäumungsvorgangs und/oder des Aushärtungsvorgangs zumindest im Eintrittsbereich des Kunststoffprofils auch beheizt sein.
Nach der Kalibriereinrichtung durchläuft das Kunststoffprofil 1 gegebenenfalls eine separate Kühleinrichtung, wobei es beispielsweise in ein Wasserbad gelangt oder von Wasserduschen besprüht wird.
Unter bestimmten Bedingungen ist es allenfalls möglich, dass nur eine Kühleinrichtung anstelle einer Kalibriereinrichtung 20 eingesetzt wird. Dies ist beispielsweise der Fall wenn das Kunststoffhohlprofil kurz vor Beginn des Schäumungsvorgangs oder zeitgleich mit diesem von aussen so abgekühlt wird, dass es äusserlich vollständig erstarrt ist, innen jedoch noch eine für den Schäumungsvorgang ausreichende Temperatur aufweist. Dabei muss der erstarrte Aussenbereich so fest sein, dass die Querschnittsgestalt des Kunststoffprofils während des Schäumungsvorgangs nicht beeinträchtigt wird.
Am Ende des Co-Extrusionsverfahrens befindet sich eine Abzugseinrichtung 21, mit welcher das Kunststoffprofil 1 bei einer konstanten, an die Förderleistung des Extruders angepasste, Geschwindigkeit, abgezogen wird und mittels einer Trennvorrichtung dann in Abschnitte gewünschter Länge getrennt wird.

Weiterhin umfasst die Erfindung ein Kunststoffprofil, welches nach einem vorhergehend beschriebenen Verfahren hergestellt wird.

Weiterhin umfasst die Erfindung die Verwendung von Kunststoffprofilen, welche nach einem vorhergehend beschriebenen Verfahren hergestellt werden, als Profile für Fenster, Türen, Tore, Klappen, Luken und dergleichen, insbesondere als Flügelprofile und/oder als Rahmenprofile für Fenster.

### Bezugszeichenliste

- 1: Kunststoffprofil mit geschäumtem Kern
- 2: Kunststoffhohlprofil bzw. Aussenprofil
- 3: Kunststoff in festem Zustand
- 4: aufgeschmolzener Kunststoff
- 5: Kern / geschäumtes Material
- 6: schäumbares Material
- 7: teilweise geschäumtes Material
- 8: erster Extruder
- 9: zweiter Extruder
- 10: Förderschnecke des ersten Extruders
- 11: Förderschnecke des zweiten Extruders
- 12: Düse
- 13: Heizelement
- 14: Trichter des ersten Extruders
- 15: Trichter des zweiten Extruders
- 16: Getriebe des ersten Extruders
- 17: Getriebe des zweiten Extruders
- 18: Motor des ersten Extruders
- 19: Motor des zweiten Extruders
- 20: Kalibriereinrichtung
- 21: Abzugseinrichtung
- 22: Flügelprofil eines Fensters
- 23: Rahmenprofil eines Fensters
- 24: Glasscheibe

## Patentansprüche

1. Verfahren zur Herstellung von Kunststoffprofilen mit einem geschäumten Kern (1) in einem Co-Extrusionsverfahren,
bei welchem
ein schäumbares Material (6) in den Hohlraum eines Kunststoffhohlprofils co-extrudiert wird und darin geschäumt wird,
wobei
i) in einem ersten beheizbaren Extruder (8) ein Kunststoff (3) im festen Zustand eingefüllt wird;
ii) der Kunststoff (3) während der Förderung mittels Förderschnecke (10) in Richtung der Düse (12) aufgeschmolzen und komprimiert wird;
iii) der aufgeschmolzene Kunststoff (4) durch die Düse zu einem Kunststoffhohlprofil (2) ausgepresst wird;
iv) ein festes, schäumbares Material (6) eingefüllt wird;
v) das schäumbare Material im festen Zustand in Richtung der Düse (12) gefördert wird;
vi) das schäumbare Material im festen Zustand in den Hohlraum des co-extrudierten Kunststoffhohlprofils gefördert wird;
vii) das schäumbare Material im inneren des Kunststoffhohlprofils ausschäumt, dadurch gekenzeichnet, dass das schäumbare Material in einem zweiten Extruder (9) eingeführt wird und mittels einer Förderschnecke (11) in Richtung Düse (12) gefördert wird.

2. Verfahren gemäss einem der vorhergehenden Ansprüche,
**dadurch gekennzeichnet,**
**dass** der Kunststoff des Kunststoffhohlprofils bei einer Temperatur von 150 °C bis 350 °C, insbesondere von 170 °C bis 260 °C, bevorzugt von 180 °C bis 220 °C, extrudiert wird.

3. Verfahren gemäss einem der vorhergehenden Ansprüche.

4. Verfahren gemäss einem der vorhergehenden Ansprüche,
**dadurch gekennzeichnet,**
**dass** der Kunststoff (3) als Granulat oder als Pulver vorliegt.

5. Verfahren gemäss einem der vorhergehenden Ansprüche,
**dadurch gekennzeichnet,**
**dass** das schäumbare Material thermisch, bei einer Temperatur von ≤ 160 °C, insbesondere von 80 °C bis 150 °C, bevorzugt von 90 °C bis 140 °C, schäumbar ist.

6. Verfahren gemäss einem der vorhergehenden Ansprüche,
**dadurch gekennzeichnet,**
**dass** das schäumbare Material (6) beim Verlassen der Düse (12) durch die Abwärme des Kunststoffhohlprofils geschäumt wird.

7. Verfahren gemäss Anspruch 6,
**dadurch gekennzeichnet,**
**dass** das geschäumte Material durch die Abwärme des Kunststoffhohlprofils ausgehärtet wird.

8. Verfahren gemäss einem der vorhergehenden Ansprüche,
**dadurch gekennzeichnet,**
**dass** das schäumbare Material (6) als Granulat vorliegt.

9. Verfahren gemäss einem der vorhergehenden Ansprüche,
**dadurch gekennzeichnet,**
**dass** das schäumbare Material (6) mindestens ein chemisches Treibmittel enthält.

10. Verfahren gemäss einem der vorhergehenden Ansprüche,
**dadurch gekennzeichnet,**
**dass** das Kunststoffprofil (1) unmittelbar nach dem Co-Extrusionsverfahren eine Kalibriereinrichtung (20) durchläuft, in welcher die vorgegebene Querschnittsgestalt des Kunststoffprofils während der Schäumung des schäumbaren Materials erhalten bleibt.

11. Verfahren gemäss einem der vorhergehenden Ansprüche,
**dadurch gekennzeichnet,**
**dass** das Kunststoffprofil (1) nach dem Co-Extrusionsverfahren eine Kühleinrichtung durchläuft.

12. Verfahren gemäss einem der vorhergehenden Ansprüche,
**dadurch gekennzeichnet,**
**dass** das Kunststoffprofil (1) ein Flügelprofil (22) oder ein Rahmenprofil (23) eines Fensters oder einer Türe ist

13. Verwendung eines Kunststoffprofils, welches gemäss einem der Ansprüche 1 bis 12 hergestellt wird,
als Profil für Fenster, Türen, Tore, Klappen, Luken und dergleichen, insbesondere als Flügelprofil und/oder als Rahmenprofil für Fenster.

## Claims

1. Method for producing plastics profiles having a foamed core (1) in a co-extrusion method,
in which
a foamable material (6) is co-extruded into the cavity of a hollow plastics profile and foamed therein,
wherein
i) a plastics material (3) in the solid state is loaded into a first heatable extruder (8);
ii) the plastics material (3) is melted and compressed during conveying by means of a conveying screw (10) in the direction of the die (12);
iii) the molten plastics material (4) is extruded through the die to give a hollow plastics profile (2);
iv) a solid, foamable material (6) is loaded;
v) the foamable material in the solid state is conveyed in the direction of the die (12);
vi) the foamable material in the solid state is conveyed into the cavity of the co-extruded hollow plastics profile;
vii) the foamable material is foamed to completion within the hollow plastics profile,
**characterised in that** the foamable material is fed into a second extruder (9) and conveyed by means of a conveying screw (11) in the die (12) direction.

2. Method according to any of the preceding claims,
**characterised in that**
the plastics material of the hollow plastics profile is extruded at a temperature of from 150 °C to 350 °C, in particular from 170 °C to 260 °C, preferably from 180 °C to 220 °C.

3. Method according to any of the preceding claims,
**characterised in that**
the plastic material is polyvinyl chloride (PVC).

4. Method according to any of the preceding claims,
**characterised in that**
the plastics material (3) takes the form of granules or powder.

5. Method according to any of the preceding claims,
**characterised in that**
the foamable material is foamable thermally at a temperature of ≤ 160 °C, in particular from 80 °C to 150 °C, preferably from 90 °C to 140 °C.

6. Method according to any of the preceding claims,
**characterised in that**,
on leaving the die (12), the foamable material (6) is foamed by the waste heat from the hollow plastics profile.

7. Method according to claim 6,
**characterised in that**
the foamed material is cured by the waste heat from the hollow plastics profile.

8. Method according to any of the preceding claims,
**characterised in that**
the foamable material (6) takes the form of granules.

9. Method according to any of the preceding claims,
**characterised in that**
the foamable material (6) contains at least one chemical blowing agent.

10. Method according to any of the preceding claims,
**characterised in that**
immediately after the co-extrusion method, the plastics profile (1) passes through a calibration device (20), in which the prescribed cross-sectional shape of the plastics profile is retained during the foaming of the foamable material.

11. Method according to any of the preceding claims,
**characterised in that**,
after the co-extrusion method, the plastics profile (1) passes through a cooling device.

12. Method according to any of the preceding claims.
**characterised in that**
the plastics profile (1) is a leaf profile (22) or a frame profile (23) of a window or of a door.

13. Use of a plastics profile, which is produced according to any of claims 1 to 12, as a profile for windows, doors, gates, flaps, hatches and the like, in particular as a leaf profile and/or as a frame profile for windows.

## Revendications

1. Procédé de fabrication de profilés en matière plastique avec un noyau en mousse (1) dans un procédé de coextrusion,
selon lequel on coextrude un matériau transformable en mousse (6) dans l'espace creux d'un profilé creux en matière plastique et on le transforme en mousse à l'intérieur de ce dernier
et selon lequel
i) on verse une matière plastique (3) à l'état solide dans un premier extrudeur (8) pouvant être chauffé :
ii) on fait fondre et on comprime la matière plastique (3) pendant le transport au moyen d'une vis sans fin (10) en direction de la buse (12) ;
iii) on fait sortir par pression la matière plastique fondue (4) à travers la buse pour donner un profilé creux en matière plastique (2) ;
iv) on verse un matériau solide transformable en mousse (6) ;
v) on transporte à l'état solide le matériau transformable en mousse en direction de la buse (12) ;
vi) on transporte à l'état solide le matériau transformable en mousse dans l'espace creux du profilé creux en matière plastique coextrudé ;
vil) on transforme en mousse le matériau transformable en mousse à l'intérieur du profilé creux en matière plastique ;
**caractérisé en ce qu'**on introduit le matériau transformable en mousse dans un deuxième extrudeur (9) et **en ce qu'**on le transporte en direction de la buse (12) au moyen d'une vis sans fin (11).

2. Procédé selon la revendication précédente, **caractérisé en ce que** l'on extrude la matière plastique du profilé creux en matière plastique à une température de 150 °C à 350 °C, notamment de 170 °C à 260 °C, de préférence de 180 °C à 220 °C.

3. Procédé selon l'une des revendications précédentes, **caractérisé en ce que** la matière plastique est du polychlorure de vinyle (PVC).

4. Procédé selon l'une des revendications précédentes, **caractérisé en ce que** la matière plastique (3) se présente sous forme de granulat ou de poudre.

5. Procédé selon l'une des revendications précédentes, **caractérisé en ce que** le matériau transformable en mousse est transformable en mousse sous l'action de la chaleur, à une température inférieure ou égale à 160 °C, notamment de 80 °C à 150 °C, de préférence de 90 °C à 140 °C.

6. Procédé selon l'une des revendications précédentes, **caractérisé en ce que**, lorsqu'il quitte la buse (12), le matériau transformable en mousse (6) est transformé en mousse sous l'action de la chaleur perdue du profilé creux en matière plastique.

7. Procédé selon la revendication 6, **caractérisé en ce que** le matériau transformé en mousse est durci par la chaleur perdue du profilé creux en matière plastique.

8. Procédé selon l'une des revendications précédentes, **caractérisé en ce que** le matériau transformable en mousse (6) se présente sous forme de granulat.

9. Procédé selon l'une des revendications précédentes, **caractérisé en ce que** le matériau transformable en mousse (6) contient au moins un agent chimique moussant.

10. Procédé selon l'une des revendications précédentes, **caractérisé en ce que**, juste après le procédé de coextrusion, le profilé en matière plastique (1) traverse un dispositif de calibrage (20) dans lequel la forme en section transversale prédéterminée du profilé en matière plastique reste maintenue pendant la transformation en mousse du matériau transformable en mousse.

11. Procédé selon l'une des revendications précédentes, **caractérisé en ce que**, après le procédé de coextrusion, le profilé en matière plastique (1) traverse un dispositif de refroidissement.

12. Procédé selon l'une des revendications précédentes, **caractérisé en ce que** le profilé en matière plastique (1) est un profilé de vantail (22) ou un profilé de châssis (23) d'une fenêtre ou d'une porte.

13. Utilisation d'un profilé en matière plastique qui est fabriqué selon l'une des revendications 1 à 12 comme profilé pour des fenêtres, des portes, des portails, des volets, des trappes ou autres objets analogues, notamment comme profilé de vantail et/ou comme profilé de châssis.
